Europäisches Patentamt

European Patent Office

Office européen des brevets

(19)

(11) Veröffentlichungsnummer: **0 153 621**
**B1**

(12) # EUROPÄISCHE PATENTSCHRIFT

(45) Veröffentlichungstag der Patentschrift :
**17.08.88**

(51) Int. Cl.⁴ : **A 01 F 29/00**, A 01 D 45/02

(21) Anmeldenummer : **85101217.9**

(22) Anmeldetag : **06.02.85**

(54) **Trommelhäcksler mit einer Nachzerkleinerungseinrichtung.**

(30) Priorität : **08.02.84 DD 259936**

(43) Veröffentlichungstag der Anmeldung :
**04.09.85 Patentblatt 85/36**

(45) Bekanntmachung des Hinweises auf die Patenterteilung : **17.08.88 Patentblatt 88/33**

(84) Benannte Vertragsstaaten :
**AT BE CH DE FR GB IT LI NL**

(56) Entgegenhaltungen :
**EP-A- 0 058 431**
**DE-A- 2 250 144**
**DE-A- 2 422 894**
**DE-B- 2 445 702**
**DE-C- 1 237 833**

(73) Patentinhaber : **VEB KOMBINAT FORTSCHRITT
LANDMASCHINEN
Berghausstrasse 1
DDR-8355 Neustadt in Sachsen (DD)**

(72) Erfinder : **John, Günter, Dipl.-Ing.
Fr.-Engels-Strasse 46
DDR-8355 Neustadt (DD)**
Erfinder : **Kretschmer, Karl-Heinz, Dipl.-Ing.
Bruno-Dietze-Ring 28
DDR-8355 Neustadt (DD)**
Erfinder : **Schumacher, Horst, Dipl-Ing.
Laubigtweg 5b
DDR-8353 Langburkersdorf (DD)**
Erfinder : **Noack, Christian, Dipl.-Ing.
Nr.6
DDR-8601 Guttau (DD)**
Erfinder : **Hänel, Volker, Dipl.-Landw.
Bruno-Dietze-Ring 32
DDR-8355 Neustadt (DD)**
Erfinder : **Röllich, Jürgen, HS-Ing.
Nr.62
DDR-8361 Ehrenberg (DD)**

(74) Vertreter : **Zipse + Habersack
Kemnatenstrasse 49
D-8000 München 19 (DE)**

EP 0 153 621 B1

## Beschreibung

Die Erfindung betrifft einen Trommelhäcksler gemäß dem Oberbegriff des Anspruchs 1, d.h. einen Trommelhäcksler mit einer aktiven Nachzerkleinerungseinrichtung für landwirtschaftliche Produkte, insbesondere Mais. Die Erfindung läßt sich vorzugsweise bei Feldhäckslern einsetzen.

Bei der Herstellung von Lieschkolbenschrot und Ganzpflanzenhäcksel mit hohem Trockenmassegehalt ist aus tierphysiologischen Gründen die Zerkleinerung der Maiskörner bei aufgefaserten Stengelteilen erforderlich. Hierzu werden bereits verschiedene Mittel eingesetzt.

So werden z. B. nach der DE-C-1237833, Nachschneidesiebe zwischen Häckseltrommeln und dem Auswurfschacht eingesetzt. Die Häckseltrommel ist so ausgebildet, daß die Messer gleichzeitig Wurfelemente bilden. Es zeigte sich jedoch, daß diese Lösungen einen sehr hohen Leistungsbedarf haben, die Durchsatzleistung stark absinkt und es zu Verstopfungen des Auswurfschachtes kommt.

Weiterhin sind Nachzerkleinerungseinrichtungen mit aktiven Zerkleinerungselementen bekannt. Nach der DE-A-2422894 ist in einem steigenden Abgabeschacht einer Häckseltrommel in einer Umlenkstelle zu einem fallenden Abgabeschacht eine Nachschneidetrommel mit einem oberhalb angeordneten Reibboden eingesetzt. Von dort muß das nachzerkleinerte Erntegut einem gesonderten Wurfgebläse zugeführt werden. Nach dem EP-A-0058431 ist eine Anordnung mit zwei Quetschwalzen hinter einer Häckseltrommel bekannt. Die Quetschwalzen sind zur Häckseltrommel nach unten versetzt und das nachzerkleinerte Erntegut wird über zwei Förderschnecken einem Wurfgebläse zugeführt.

Letztlich ist in der DE-A-22 50 144 eine Nachzerkleinerungseinrichtung mit aktiven Zerkleinerungswalzen beschrieben. Die Zerkleinerungswalzen sind am Umfang der Häckseltrommel über den gesamten unteren Bereich verteilt angeordnet. Das nachzerkleinerte Erntegut fällt durch die Zerkleinerungswalzen nach unten heraus und wird über verschiedene Fördermittel abtransportiert.

All diesen Lösungen mit aktiven Nachzerkleinerungseinrichtungen haftet ein entscheidender Nachteil an. Zum Abtransport des nachzerkleinerten Erntegutes sind in jedem Falle weitere Fördermittel notwendig. Damit wird die Leistungsbilanz des Trommelhäckslers negativ beeinflußt und die Gesamtaufwendungen zum Abtransport des Erntegutes aus dem Trommelhäcksler sind hoch. Die Lösung gemäß DE-A-22 50 144 ist außerdem im Aufbau sehr kompliziert und für einen Feldhäcksler durch einen hohen Bauraumbedarf kaum einsetzbar.

Die Erfindung hat das Ziel, einen Trommelhäcksler mit einer aktiven Nachzerkleinerungseinrichtung zu schaffen, die bei einem niedrigen Leistungsbedarf geringe Aufwendungen für den Abtransport des Erntegutes besitzt und in Feldhäckslern gut einsetzbar ist.

Der Erfindung liegt die Aufgabe zugrunde, einen Trommelhäcksler mit einer aktiven Nachzerkleinerungseinrichtung mit Zerkleinerungswalzen, gemäß dem Oberbegriff des Anspruchs 1 zu schaffen, der keine zusätzlichen Fördermittel zum Abtransport des Erntegutes benötigt und mit einem geringen Bauraum auskommt.

Dies wird dadurch erreicht, daß ein Boden des gesonderten Gehäuses an seiner Hinterkante von einer zur Häckseltrommel, deren Messer Wurfelemente besitzen, konzentrisch angeordneten Wurfwanne fortgesetzt ist. Das Erntegut wird nach dem Schnitt an der Gegenschneide von der Häckseltrommel in das gesonderte Gehäuse vor die Zerkleinerungswalzen abgeworfen und von der oder den Zerkleinerungswalzen erfaßt. Je nach Drehrichtung der Zerkleinerungswalze bzw. -walzen wird das Erntegut zwischen der Häckseltrommel und der bzw. den Zerkleinerungswalzen oder zwischen dem Boden und der bzw. den Zerkleinerungswalzen weiter zerkleinert. Bei zwei oder mehreren Zerkleinerungswalzen können diese die gleiche oder eine entgegengesetzte Drehrichtung aufweisen. Der Drehsinn richtet sich hierbei nach den verschiedenen Erntegutarten. Hinter der oder den Zerkleinerungswalzen wird das Erntegut über den Bereich der Wurfwanne durch die Häckseltrommel für die Abgabe über einen Auswurfschacht beschleunigt.

Nach der Erfindung ist es zweckmäßig, daß der Boden des Gehäuses zu der oder den Zerkleinerungswalzen oder umgekehrt die Zerkleinerungswalze- oder -walzen zum Boden des Gehäuses einstellbar sind. Hierdurch ist es möglich, für jede Erntegutart eine optimale Spaltweite und somit einen guten Nachzerkleinerungseffekt zu erreichen. Zur weiteren Verbesserung des Nachzerkleinerungseffektes ist es erfindungsgemäß sinnvoll, wenn die Zerkleinerungswalzen Vorsprünge oder Messer und der Boden an seiner Innenseite Vorsprünge oder Reibleisten tragen. Weiterhin kann zwischen dem Boden und der Wurfwanne eine Gegenschneide angeordnet sein.

Letztlich ist es nach der Erfindung zweckmäßig, daß die Zerkleinerungswalze oder -walzen über einen Hülltrieb von der Häckseltrommel antreibbar sind und zwischen der Häckseltrommel und der Zerkleinerungswalze oder den Zerkleinerungswalzen in Verlängerung der Wurfwanne eine Abdeckung einfügbar ist. Die Abdeckung wird dann eingefügt, wenn bei bestimmten Erntegutarten keine zusätzliche Nachzerkleinerung erforderlich ist. In diesem Falle ist es auch sinnvoll, den Antrieb der Zerkleinerungswalze oder -walzen stillzusetzen. Die Erfindung hat den Vorteil, daß keine zusätzlichen Fördermittel zum Abtransport des nachzerkleinerten Erntegutes benötigt werden. Der Trommelhäcksler kommt mit einer einfachen Häckseltrommel mit Wurfelementen, einer sogenannten Schneid-Wurf-Trommel aus. Damit sinkt gegenüber den bekannten Lösungen der Leistungsbedarf. Gleichzeitig benötigt der erfindungsgemäße Trommelhäcksler einen geringen Bauraum und ist deshalb für den Einsatz in einem Feldhäcksler besonders gut geeignet.

Nachstehend soll die Erfindung an Ausführungsbeispielen näher erläutert werden. In den zugehörigen Zeichnungen zeigen :

Fig. 1 : einen Schnitt durch einen Trommelhäcksler mit einer Zerkleinerungswalze ;

Fig. 2 : einen teilweisen Schnitt durch einen Trommelhäcksler mit zwei gleichartigen Zerkleinerungswalzen ;

Fig. 3 : einen teilweisen Schnitt durch einen Trommelhäcksler mit zwei unterschiedlichen Zerkleinerungswalzen ;

Fig. 4 : einen teilweisen Schnitt durch einen Trommelhäcksler mit einer nach oben fördernden Zerkleinerungswalze ;

Fig. 5 : einen teilweisen Schnitt durch einen Trommelhäcksler mit einer messerbesetzten Zerkleinerungswalze und Schwingenlagerung.

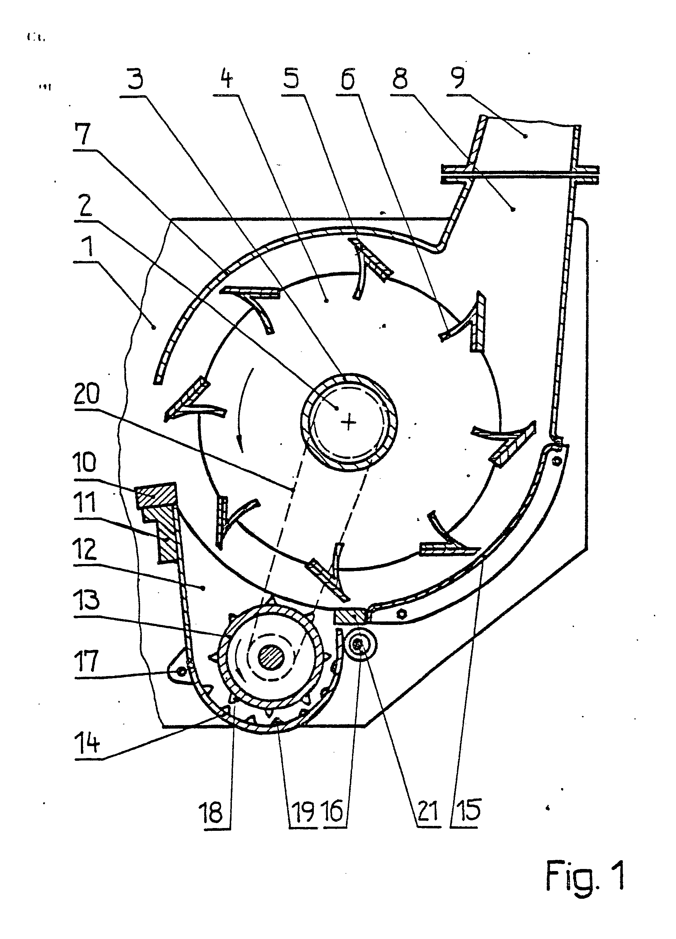

Nach Fig. 1 sitzt in einem Gehäuse 1 eines Trommelhäckslers, insbesondere Feldhäckslers, eine Häckseltrommel 2. Die Häckseltrommel 2 trägt an einem Zentralrohr 3 Trommelscheiben 4, an denen wiederum Messer 5 befestigt sind. An der Innenseite der Messer 5 befinden sich Wurfelemente 6. Die Häckseltrommel 2 ist teilweise von einem Mantel 7 umgeben, der in einem Auswurfschacht 8 mündet. Auf dem Auswurfschacht 8 sitzt schwankbar ein Auswurfbogen 9. Vor der Häckseltrommel 2 ist im Gehäuse 1 eine Gegenschneide 10 auf einem Gegenschneidenträger 11 befestigt. Unter der Häckseltrommel 2 ist in einem gesonderten Gehäuse 12 eine Zerkleinerungswalze 13 gelagert. Das Gehäuse 12 beginnt an der Gegenschneide 10 und umschließt die Zerkleinerungswalze 13 so, daß die Seite zur Häckseltrommel 2 offen bleibt.

Der Boden 14 des Gehäuses 12 ist an seiner Hinterkante von einer zur Häckseltrommel 2 konzentrisch angeordneter Wurfwanne 15 fortgesetzt. Der Boden 14 ist über einen Exenter 16 und eine Anlenkung 17 gegenüber der Zerkleinerungswalze 13 einstellbar. Die Zerkleinerungswalze 13 trägt in dieser Ausführung an ihrem Umfang eine Vielzahl von Vorsprüngen 18 ähnlich den Stiften einer Dreschtrommel. Der Boden 14 als Gegenstück der Zerkleinerungswalze 13 besitzt ebenfalls eine Vielzahl von solchen Vorsprüngen 19. Mit dieser Anordnung wird ein Schlageffekt entsprechend der Wirkungsweise eines Dreschwerkes erzielt. Hierzu wird die Zerkleinerungswalze 13 mit einem Hülltrieb 20 von der Häckseltrommel 2 angetrieben. Die Drehrichtung ist so gewählt, daß das Erntegut zwischen Boden 14 und Zerkleinerungswalze 13 eingezogen wird. Zur weiteren Verbesserung des Zerkleinerungseffektes ist zwischen dem Boden 14 und der Wurfwanne 15 eine zweite Gegenschneide 21 im Gestell 1 befestigt.

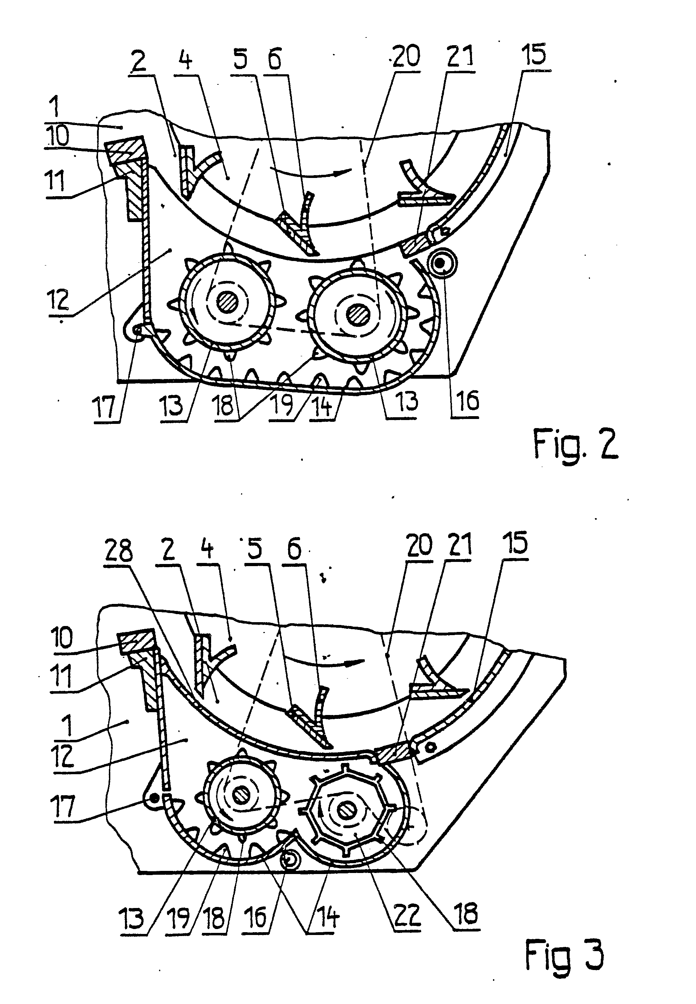

Die Ausführungen nach Fig. 2 und Fig. 3 arbeiten mit je zwei Zerkleinerungswalzen. Nach Fig. 2 sind es zwei gleichartige Zerkleinerungswalzen 13 mit Vorsprüngen 18, die auch gleichsinnig über den Hüllbetrieb 20 angetrieben werden.

Der Boden 14 ist entsprechend der zwei Zerkleinerungswalzen 13 verlängert.

Mit dieser Ausführung kann besonders widerstandsfähiges Erntegut aufgeschlossen werden.

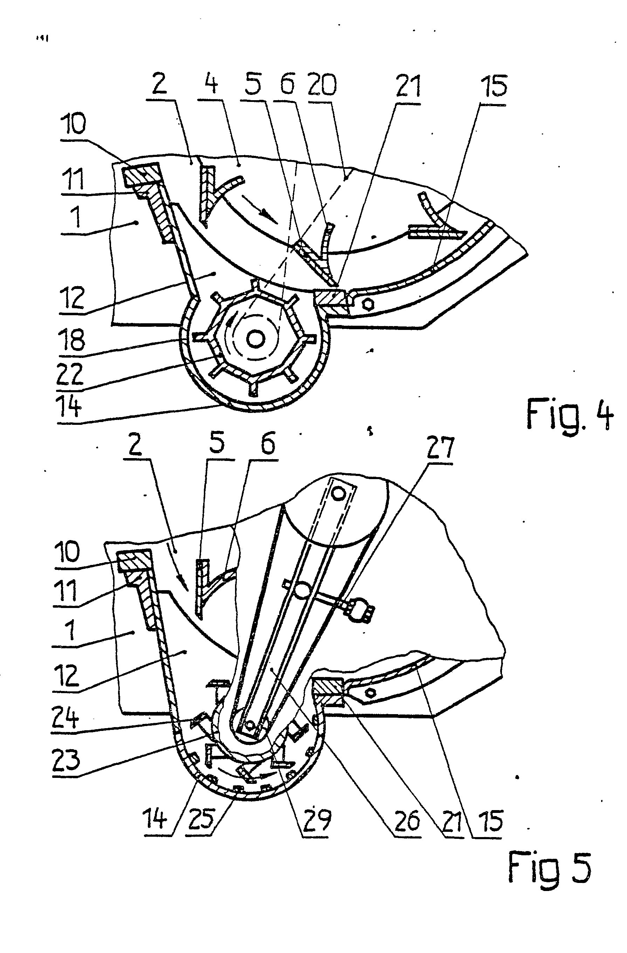

Nach. Fig. 3 ist im Gehäuse 12 als erstes eine Zerkleinerungswalze 13 nach der bereits beschriebenen Art angeordnet. Dahinter sitzt eine zur ersten gegenläufig angetriebene Zerkleinerungswalze 22. Bei dieser Zerkleinerungswalze 22 sind die Vorsprünge 18 als durchgängige Stege ausgebildet. Der Boden 14 dieser Ausführung ist geteilt, wobei das vordere Teil wie bereits beschrieben Vorsprünge 19 trägt und über einen Exenter 16 zur Zerkleinerungswalze 13 einstellbar ist. Der hintere Teil des Bodens 14 ist feststehend und eng um die Zerkleinerungswalze 22 gelegt. Nach Fig. 4 ist diese letztgenannte Art der Zerkleinerungswalze 22 allein eingesetzt. Die Drehrichtung der Zerkleinerungswalze 22 ist hier gegenüber dem ersten Ausführungsbeispiel nach Fig. 1 umgekehrt, indem der Hülltrieb 20 z. B. verschränkt ist. Dadurch wird das Erntegut zwischen Häckseltrommel 2 und Zerkleinerungswalze 22 weitergeleitet und durch die Schlagwirkungen der Vorsprünge 18 bzw. der Messer 5 der Häckseltrommel 2 und an der Gegenschneide 21 aufgeschlossen. Der Boden 14 ist glatt und feststehend ausgeführt. In Fig. 5 ist eine letzte Ausführung dargestellt. Die Zerkleinerungswalze 23 ist hier mit Messern 24 bestückt. Der Boden 14 ist in dieser Ausführung feststehend angeordnet und trägt Reibleisten 25, die etwa in Richtung der Achse der Zerkleinerungswalze 23 verlaufen. Die Drehrichtung der Zerkleinerungswalze 23 ist so gewählt, daß das Erntegut zwischen Boden 14 und Zerkleinerungswalze 23 eingezogen wird. Weiter ist hier die Zerkleinerungswalze 23 über Schwingen 26 an der Welle der Häckseltrommel 2 gelagert.

An einer der Schwingen 26 greift eine ebenfalls am Gehäuse 1 aufgenomene Stellspindel 27 an. Somit kann die Zerkleinerungswalze 23 gegenüber dem Boden 14 verschwenkt werden. Es ist jedoch auch denkbar, daß wie bei den anderen Ausführungsbeispielen die Zerkleinerungswalze 23 fest im Gehäuse 1 gelagert ist und der Boden 14 einstellbar gestaltet wird.

Ferner ergeben sich weitere Ausführungen durch eine sinnreiche Kombination der verschiedenen Ausbildungen nach Fig. 1 bis Fig. 5. Letztlich besteht bei allen Ausführungen die Möglichkeit, die Nachzerkleinerungseinrichtung stillzusetzen. Dann wird, wir in Fig. 3 dargestellt, zwischen der Häckseltrommel 2 und die Zerkleinerungswalze oder -walzen 13 ; 22 ; 23 in Verlängerung der Wurfwanne 15 eine Abdeckung 28 eingefügt.

**Patentansprüche**

1. Trommelhäcksler mit einer in einem Gehäuse (1) gelagerten Häckseltrommel (2) und einer Gegenschneide (10) am Gehäuse (1) sowie mit einer aktiven Nachzerkleinerungseinrichtung mit am Umfang der Häckseltrommel (2) hinter der Gegenschneide (10) in einem zur Häckseltrommel (2) offenen gesonderten Gehäuse (12) gelagerten, antreibbaren Zerkleinerungswalzen, dadurch gekennzeichnet, daß ein Boden (14) des gesonderten Gehäuses (12) an seiner Hinterkante von einer zur Häckseltrommel (2), deren Messer (5) Wurfelemente (6) besitzen, konzentrisch angeordneten Wurfwanne (15) fortgesetzt ist.

2. Trommelhäcksler nach Anspruch 1, dadurch gekennzeichnet, daß der Boden (14) des gesonderten Gehäuses (12) zu der oder den Zerkleinerungswalzen (13, 22, 23) einstellbar ist.

3. Trommelhäcksler nach Anspruch 1, daß die Zerkleinerungswalze oder -walzen (13, 22, 23) zum Boden (14) des gesonderten Gehäuses (12) einstellbar sind.

4. Trommelhäcksler nach Anspruch 1, dadurch gekennzeichnet, daß die Zerkleinerungswalzen (13, 22, 23) Vorsprünge (18) oder Messer (24) tragen.

5. Trommelhäcksler nach Anspruch 1, dadurch gekennzeichnet, daß der Boden (14) des gesonderten Gehäuses (12) an seiner Innenseite Vorsprünge (19) oder Reibleisten (25) trägt.

6. Trommelhäcksler nach Anspruch 1, dadurch gekennzeichnet, daß zwischen dem Boden (14) des gesonderten Gehäuses (12) und der Wurfwanne (15) eine zweite Gegenschneide (21) angeordnet ist.

7. Trommelhäcksler nach Anspruch 1, dadurch gekennzeichnet, daß die Zerkleinerungswalze oder -walzen (13, 22, 23) über einen Hülltrieb (20) von der Häckseltrommel (2) antreibbar sind.

8. Trommelhäcksler nach Anspruch 1, dadurch gekennzeichnet, daß zwischen der Häckseltrommel (2) und der Zerkleinerungswalze oder den -walzen (13, 22, 23) in Verlängerung der Wurfwanne (15) eine Abdeckung (28) einfügbar ist.

**Claims**

1. Drum chaff-cutter with a chaff-cutting drum (2) borne in a housing (2) and a counterknife (10) at the housing (1) as well as with an active further comminuting equipment with drivable comminuting cylinders which are borne behind the counterknife (10) at the circumference of the chaff-cutting drum (2) and in a separate housing (12) open toward the chaff-cutting drum (2), characterized thereby, that a base (14) of the separate housing (12) is continued at its rear edge from a thrower trough (15) arranged concentrically with the chaff-cutting drum (2), the knives (5) of which display thrower elements (6).

2. Drum chaff-cutter according to claim 1, characterized thereby, that the base (14) of the separate housing (12) is adjustable relative to the comminuting cylinder or cylinders (13, 22, 23).

3. Drum chaff-cutter according to claim 1, characterized thereby, that the comminuting cylinder or cylinders (13, 22, 23) is or are adjustable relative to the base (14) of the separate housing (12).

4. Drum chaff-cutter according to claim 1, characterized thereby, that the comminuting cylinders (13, 22, 23) carry projections (18) or knives (24).

5. Drum chaff-cutter according to claim 1, characterized thereby, that the base (14) of the separate housing (12) at its inward side carries projections (19) or rubbing strips (25).

6. Drum chaff-cutter according to claim 1, characterized thereby, that a second counterknife (21) is arranged between the base (14) of the separate housing (12) and the thrower trough (15).

7. Drum chaff-cutter according to claim 1, characterized thereby, that the comminuting cylinder or cylinders (13, 22, 23) is or are drivable by the chaff-cutting drum (2) through an encased drive (20).

8. Drum chaff-cutter according to claim 1, characterized thereby, that a cover (28) is insertable in prolongation of the thrower trough (15) and between the chaff-cutting drum (2) and the comminuting cylinder or cylinders (13, 22, 23).

**Revendications**

1. Hachoir à tambour comprenant un tambour de hachage (2) tourillonnant dans un carter (1) et une contre-lame (10) sur le carter (1), ainsi qu'un dispositif de post-broyage actif comprenant des cylindres de broyage tourillonnant à la périphérie du tambour de hachage (2), derrière la contre-lame (10), dans un carter distinct (12) ouvert vers le tambour de hachage (2) et susceptibles d'être entraînés, caractérisé en ce qu'un fond (14) du carter distinct (12) se poursuit, à son bord arrière, par une cuvette d'éjection (15) disposée concentriquement au tambour de hachage (2), dont les couteaux (5) possèdent des éléments éjecteurs (6).

2. Hachoir à tambour selon la revendication 1, caractérisé en ce que le fond (14) du carter distinct (12) est réglable par rapport au ou aux cylindre(s) de broyage (12, 22, 23).

3. Hachoir à tambour selon la revendication 1, caractérisé en ce que le ou les cylindre(s) de broyage (13, 22, 23) sont réglables par rapport au fond (14) du carter distinct (12).

4. Hachoir à tambour selon la revendication 1, caractérisé en ce que les cylindres de broyage (13, 22, 23) portent des saillies (18) ou des lames (24).

5. Hachoir à tambour selon la revendication 1, caractérisé en ce que le fond (14) du carter distinct (12) porte des saillies (16) ou des nervures de friction (25) sur sa face intérieure.

6. Hachoir à tambour selon la revendication 1, caractérisé en ce qu'une contre-lame (21) est interposée entre le fond (14) du carter distinct (12) et la cuvette d'éjection (15).

7. Hachoir à tambour selon la revendication 1, caractérisé en ce que le ou les cylindre(s) de broyage (13, 22, 23) peuvent être entraînés par le tambour de hachage (2) par l'intermédiaire d'une

7　　　0 153 621　　　8

transmission sous carter (20).

8. Hachoir à tambour selon la revendication 1, caractérisé en ce qu'un couvercle (28) peut être interposé entre le tambour de hachage (2) et le ou les cylindres(s) de broyage (13, 22, 23) dans le prolongement de la cuvette d'éjection (15).

Fig. 1

Fig. 2

Fig 3

Fig. 4

Fig 5